# EUROPEAN PATENT APPLICATION

(11) **EP 2 320 268 A1**
(43) Date of publication of application: **11.05.2011**
(21) Application number: 10011013.9
(22) Date of filing: 28.09.2010
(51) Int. Cl.: G02F 1/1337, G02B 5/30, C09K 19/38

(54) **Alignment layer for planar alignment of a polymerizable liquid crystalline or mesogenic material**

(30) Priority: 26.10.2009 EP 09013469
(71) Applicant: Merck Patent GmbH, 64293 Darmstadt (DE)
(72) Inventor: May, Philip Edward, Sidcup DA15 9AS (GB)

(57) **Abstract**

The invention relates to an alignment layer for planar alignment of a polymerizable liquid crystalline or mesogenic material, to a method of preparing such an alignment layer, to anisotropic polymer films with improved alignment made on such an alignment layer and to products comprising such an alignment layer, in particular decorative and security products.

## Description

The invention relates to an alignment layer for improved planar alignment of a polymerizable liquid crystalline or mesogenic material applied thereon, to a method of preparing such an alignment layer, to polymer films with planar orientation obtained by application of a polymerizable liquid crystalline or mesogenic material onto such an alignment layer and to their use in products, in particular decorative and security products.

Anisotropic polymer films comprising a polymerized liquid crystal material with uniform orientation are known in prior art. They are usually prepared by coating a thin layer of a polymerizable liquid crystal mixture onto a substrate, aligning the mixture into uniform orientation and polymerizing the mixture.

For specific applications it is required to induce planar alignment in the liquid crystal layer, i.e. where the liquid crystal molecules are oriented substantially parallel to the layer. The alignment is then frozen in by polymerizing the liquid crystal mixture in situ. For example, oriented films or layers of polymerized nematic liquid crystal material with planar alignment are useful as A-plate compensators or polarizers, but also for particular security applications where they may be identified by the use of linear or circular polarizers only. Another important application is oriented films or layers of polymerized cholesteric liquid crystal material having twisted molecular structure. The latter are usually made from chiral nematic (cholesteric) liquid crystal materials. If the cholesteric material has planar alignment, these films show selective reflection of light where the reflection colour is dependent on the viewing angle. They can be used for example as circular polarizers, colour filters, for the preparation of effect pigments or for several decorative or security applications. Planar alignment can be achieved for example by treatment of the substrate onto which the liquid crystal material is coated. The most usual method of surface treatment is to rub the substrate surface prior to application of the liquid crystal material. In case of rod-shaped liquid crystal molecules, these will align themselves with their long axes parallel to the rubbing direction. Alternatively it is possible to apply an alignment layer, for example of polyimide, to the substrate, which can then subsequently be rubbed or which will induce the desired alignment. Other methods are the application of shear forces such as stretching of the substrate or the addition of surface active compounds to the liquid crystal material.

Reviews of conventional alignment techniques are given for example by I. Sage in "Thermotropic Liquid Crystals", edited by G. W. Gray, John Wiley & Sons, 1987, pages 75-77, and by T. Uchida and H. Seki in "Liquid Crystals - Applications and Uses Vol. 3", edited by B. Bahadur, World Scientific Publishing, Singapore 1992, pages 1-63. A review of alignment materials and techniques is given by J. Cognard, Mol. Cryst. Liq. Cryst. 78, Supplement 1 (1981), pages 1-77.

However, the methods of prior art have several drawbacks. In particular in case that, for decorative or security purposes, substrates other than stretchable polymer films, such as metallised substrates or metal foils, have to be used, alignment layers are generally required. On the other hand, even in case stretchable films are used as substrates, stretching in a predefined direction is an additional technical step, leading to increased production cost.

Increasing cost also occurs in case an alignment layer is used which, usually, requires an additional rubbing step. Rubbing may also deteriorate the surface of the alignment layer to a certain degree, leading to insufficient orientation of the liquid crystal layer applied thereto.

In addition, the application of a greater variety of substrates for decorative and security application leads to further unresolved problems.

Usually, on display applications, glass surfaces are coated with a rubbed polyimide layer for alignment purposes. This is achieved by converting a polyamide coating into polyimide at temperatures of greater than 200 °C and subsequent rubbing of the resulting layer. The majority of common polymer substrates underneath the alignment layer would not stand these conditions and would melt or be distorted.

It has been found, that PET films give good planar alignment to nematic and cholesteric liquid crystal materials, but many other polymeric substrates, metallic substrates, paper and board lead to poor alignment of the liquid crystal materials. In addition, an increasing number of polymer substrates which are nowadays used have a print receptive layer, which is designed to give usually improved adhesion to the base substrate, although these layers do have other functional applications too. Unfortunately, liquid crystal materials do not align very well on those substrates containing print receptive layers, this is seen as a milky coloured film, which is caused by light being scattered. Therefore, intermediate aligning layers need to be applied on these pre-coated polymer substrates.

Since most of the liquid crystal materials are usually coated onto substrates in (organic) solvent based mixtures, use of non-reactive, solvent based resins in an underlying alignment layer would be inappropriate as it is likely that the liquid crystal layer, when applied thereon, would re-wet the aligning layer. In effect, the resin used in the alignment layer would be absorbed into the liquid crystal layer and would destroy the optical effect of the latter. If, to the contrary, reactive solvent based resin systems would be used in the alignment layer, heat would be required to cure them, leading to the damage of the underlying substrate in most cases.

There was, therefore, a need for an appropriate material for the preparation of an alignment layer, which does not have to be cured by the application of high temperatures and which would not be subject to re-wetting when a (organic) solvent based liquid crystal material is applied thereon. Furthermore, good planar alignment of the resulting liquid crystal film would be required.

Attempts have been made to use water-based materials such as polyvinyl alcohol (PVA) for the preparation of alignment layers, which are different from rubbed polymerized PVA films which have been used earlier.

In US 5,631,051 and US 6,726,965, optical compensatory sheets are disclosed, which comprise an orientation layer and an optically anisotropic layer. As material for the optically anisotropic layer discotic liquid crystalline compounds are used which are intended to be oriented in a certain angle from the substrate, in particular substantially vertical (homeotropic) to the substrate plane. Therefore, the orientation layer for this purpose is composed either of a crosslinked polymer layer which has been subjected to rubbing treatment (US 5,631,051) and might be of polyvinyl alcohol or of a particular denatured polyvinyl alcohol containing fluorine atoms (US 6,726,965). In each case, crosslinking and/or rubbing treatment is necessary in order to have the discotic liquid crystal material oriented in a vertical manner.

In addition, US 7,515,231 discloses a liquid crystal display comprising a crosslinked polyvinyl alcohol film with a first surface rubbed to create an alignment layer for the alignment of a nematic liquid crystal material having a pretilt angle of from 2° to 8° splayed out of the plane of the film. The crosslinked polyvinyl alcohol layer has a thickness greater than about 10 µm or even greater than about 40 µm. Here too, besides the necessity of crosslinking and rubbing, a certain pretilt angle out of the plane is intended.

In US 6,680,767, a method for forming a liquid crystal polymer layer without support substrate is disclosed. In order to achieve an appropriate release of the polymerized liquid crystal layer off the glass substrate, a water soluble release layer is required. The release layer may be combined with an alignment layer to a single layer, such as for example a layer of polyvinyl alcohol which may be dissolved in water. Nevertheless, the alignment layer is subjected to unidirectional rubbing prior to applying the liquid crystal material thereon. After the liquid crystal film is cured, the combined release/alignment layer is dissolved in running water to leave a substrate free liquid crystal foil.

It is the object of the present invention to provide an alignment layer for the planar alignment of a polymerizable liquid crystalline material which may be applied to a great variety of substrates, is not deteriorated by materials which are dissolved in organic solvents and applied thereon, does not have to be exposed to high temperatures in order to be cured, is not subject to any rubbing treatment, does not have to be crosslinked, may be overcoated or overprinted by a non-continuous, patterned layer being composed of a polymerizable liquid crystal material to which it imparts planar alignment and may be prepared in an easy and economical manner at low cost.

Furthermore, it is the object of the present invention to provide an easy and economic method for preparing the aforementioned alignment layer.

A further object of the present invention is to provide an anisotropic polymer film with planar orientation, being composed of a polymerized liquid crystalline material and being formed on the surface of said alignment layer.

Still a further object of the present invention is to provide a layered structure, comprising at least the aforementioned alignment layer and a planar oriented polymerized liquid crystal layer applied thereto. Yet another object of the present invention is a product comprising an anisotropic polymer film or a layered structure as disclosed hereabove.

The object of the present invention is achieved by an alignment layer for planar alignment of a polymerizable liquid crystalline or mesogenic material which is applied onto a surface of the alignment layer, wherein the alignment layer comprises a dried and/or cured aqueous solution of a polyvinyl alcohol having a degree of hydrolysis of ≥ 98.0 mol % and wherein the polyvinyl alcohol is a pure or modified polyvinyl alcohol.

Furthermore, the object of the present invention is achieved by a method of preparing an alignment layer for the planar alignment of a polymerizable liquid crystalline or mesogenic material, comprising the steps
- applying an aqueous solution of a polyvinyl alcohol having a degree of hydrolysis of ≥ 98.0 mol %, the aqueous solution having a solids content of less than 10% by weight, based on the weight of the solution, onto a substrate, thereby forming a wet film,
   and
- drying and/or curing the resulting wet film by exposing it to air and/or heat,
wherein the polyvinyl alcohol is a pure or modified polyvinyl alcohol, and whereby an alignment layer is achieved, which comprises an unrubbed outer surface onto which a polymerizable liquid crystalline or mesogenic material is directly applyable.

In addition, the object of the present invention is achieved by an anisotropic polymer film comprising a polymerized liquid crystalline material with planar orientation, the anisotropic polymer film being formed by application of a polymerizable liquid crystalline or mesogenic material onto an alignment layer as disclosed above, whereby a wet coating is formed, followed by polymerization of the polymerrizable liquid crystalline or mesogenic material, whereby the wet coating is converted into an anisotropic polymerized film with planar orientation, and optionally removing the anisotropic polymerized film from the alignment layer.

Still furthermore, the object of the present invention is achieved by a layered structure, comprising an alignment layer as described above, a polymerized liquid crystalline material with planar orientation which is located directly on an unrubbed surface of the alignment layer and a substrate located on the rear side of the unrubbed surface of the alignment layer.

Eventually, the object of the present invention is also achieved by a product comprising an anisotropic polymer film or a layered structure as disclosed above.

In the following, the technical terms used in the present invention shall be defined:
The term 'substrate' as used in this application refers to any underlying layer or substrate.
The term 'film' as used in this application includes self-supporting, i.e. free-standing, films that show more or less pronounced mechanical stability and flexibility, as well as coatings or layers on a supporting substrate or between two substrates.
The term 'liquid crystal or mesogenic material' or 'liquid crystal or 'mesogenic compound' should denote materials or compounds comprising one or more rod-shaped, board-shaped or disk-shaped mesogenic groups, i.e. groups with the ability to induce liquid crystal phase behaviour. The compounds or materials comprising mesogenic groups do not necessarily have to exhibit a liquid crystal phase themselves. It is also possible that they show liquid crystal phase behaviour only in mixtures with other compounds, or when the mesogenic compounds or materials, or the mixtures thereof, are polymerized.
For the sake of simplicity, the term 'liquid crystal material' is used hereinafter for both liquid crystal materials and mesogenic materials, and the term 'mesogen' is used for the mesogenic groups of the material.
The term 'planar structure' or'planar orientation' means that the liquid crystal director, i.e. the preferred orientation direction of the main molecular axes of the mesogens in the liquid crystal material, is substantially parallel to the plane of the film or layer. This definition also includes films wherein the director is slightly tilted relative to the film plane, with an average tilt angle throughout the film of up to 1°, and which exhibit the same optical properties as a film wherein the director is exactly parallel, i.e. with zero tilt, to the film plane.
The term 'tilted structure' or 'tilted orientation' means that the liquid crystal director of the film is tilted at an angle between 1 and 90 degrees relative to the film plane.
The term 'splayed structure' or 'splayed orientation' means a tilted orientation as defined above, wherein the tilt angle additionally varies monotonuously in the range from 0 to 90 °, preferably from a minimum to a maximum value, in a direction perpendicular to the film plane.
The term 'homeotropic structure' or 'homeotropic orientation' means that the liquid crystal director of the film is substantially perpendicular to the film plane, i.e. substantially parallel to the film normal. This definition also includes films wherein the director is slightly tilted at an angle of up to 2 ° relative to the film normal, and which exhibit the same optical properties as a film wherein the director is exactly parallel, i.e. with no tilt, to the film normal.
The term 'helically twisted structure' relates to a film comprising one or more layers of liquid crystal material wherein the mesogens are oriented with their main molecular axis in a preferred direction within molecular sublayers, with this preferred orientation direction in different sublayers being twisted around a helix axis that is substantially perpendicular to the film plane, i.e. substantially parallel to the film normal. This definition includes orientations of the helix axis from 75 to 90°, preferably 80 to 90°, very preferably 85 to 90° and most preferably 88 to 90° relative to the film plane.
   Materials which are useful for the preparation of such helically twisted structures are in particular liquid crystal materials that exhibit a chiral mesophase, wherein the mesogens are oriented with their main molecular axis twisted around a helix axis, like e.g. a chiral nematic (cholesteric) or a chiral smectic phase. Materials exhibiting a cholesteric phase are preferred.
The term 'nematic liquid crystal' relates to rod-shaped liquid crystal materials or mesogens which are orientable planar to the plane of the film or layer.

The alignment layer of the present invention is composed of a dried aqueous solution of a polyvinyl alcohol having a degree of hydrolysis of ≥ 98.0 mol%. Preferably, the degree of hydrolysis is at least 99.0 mol% or higher, and in particular preferred between 99.5 and 100 mol%. The degree of hydrolysis is meant to indicate the ratio of the units that have actually been converted into vinyl alcohol units through hydrolysis of the polymer to those capable of being converted into vinyl alcohol units through hydrolysis thereof.

The degree of hydrolysis of the polyvinyl alcohol may be determined by methods known in the art, e.g. by obtaining FT-IR spectra or ¹H-NMR spectra of the corresponding samples. A number of useful apparatuses for these purposes are generally known to the artist, e.g. FT/IR 410 (product of Jasco Corporation) for FT-IR spectra, JNM-AL400 (Product of Jeol Ltd.) or GX-400 (Product of Nippon Denshi Co.) for ¹H-NMR-spectra. Reference is made to the methods for the determination of the degree of hydrolysis (degree of saponification) described in US 2004/0024120 A1, page 5, and US 5,134,036, Fig.1, as well as the corresponding disclosure in columns 1 and 7, the content thereof being insofar incorporated in the present application by reference. In general, the degree of hydrolysis of a commercially available polyvinyl alcohol is indicated by the manufacturer thereof.

Besides the degree of hydrolysis, it is of advantage if the polyvinyl alcohol does also exhibit a high degree of polymerization. Therefore, a weight average molecular weight of the polyvinyl alcohol of at least 132,000, and in particular of at least 140,000, is preferred.

Polyvinyl alcohol may be produced by hydrolysis of a vinyl ester polymer such as polyvinyl acetate in presence of a catalyst, which is usually a strong inorganic acid or a base. Bases such as sodium hydroxide are preferred. Pure, unmodified polyvinyl alcohol having a high degree of hydrolysis as used in the present invention may be produced by methods which are known per se and are for example disclosed in US 3,884,892, US 4,954,567, US 5,753,753 and US 2007/0100080 A1, the content thereof being incorporated in the present invention by reference. Moreover, it is commercially available, for example under the trade name Mowiol®28-99 from Kuraray.

The polyvinyl alcohol (PVA) may be either pure or modified. In case it is modified, modification with an α-olefin having less than 4 carbon groups is preferred. In particular, modification with ethylene or propylene is executed. Especially preferred is modification with ethylene. The degree of hydrolysis as well as the weight average molecular weight of the modified PVA is in the same range as the degree of hydrolysis and the weight average molecular weight of the pure PVA as mentioned above.

Ehylene modified polyvinyl alcohol (EVOH) is usually produced by hydrolysis of ethylene vinylacetate copolymers. The production process thereof is known per se. EVOH exhibiting a high degree of polymerization and a high degree of hydrolysis as used in the present invention may, for example, be produced by the method as described in US 7,015,266, col. 2-4, as well as in US 7,071,250, which are incorporated herein by reference. In addition, ethylene modified polyvinyl alcohol which is preferably useful in the present invention is commercially available, for example under the trade name Exceval® HR 3010 from Kuraray.

The pure or modified polyvinyl alcohol as described above is soluble in water. For the purpose of preparing the alignment layer of the present invention, the pure or modified (preferably EVOH) polyvinyl alcohol, which is a solid, crystalline material, is dissolved in water (deionized or RO water being preferred) and the resulting solution applied onto an appropriate substrate. Usually, the solids content (polyvinyl alcohol) of the solution is less than 10% by weight, and preferably of from 5 to 8 % by weight, based on the weight of the solution, due to the high viscosity of the resulting solution.

In order to improve the wettability of the substrate, a surfactant may be added in an amount of from 0.001% to 2.0%, preferably from 0.05% to 1.0% by weight, based on the weight of the solution.

As surfactants in principal all compounds can be used that are known to those skilled in the art for this purpose. These compounds are commercially available in a broad variety. Typical examples for surfactants are Zonyl FSN, Zonyl FSO, Byk 361 N, Tegowet 265, Tegowet 270, Tegorad 2250, Tegorad 2300 and Surfynol 61.

In order to improve the storage stability to prevent microbial, bacterial or fungal attack, a bacteriocide/ fungicide may also be comprised in the polyvinyl alcohol solution. Since the addition of such a compound is of advantage, the use thereof is preferred.

As bacteriocide/ fungicide in principal all compounds can be used that are known to those skilled in the art for this purpose, especially those designed for "in can preservation". These compounds are commercially available in a broad variety. Typical examples include Acticide SPX, Fungitrol 158, Kathon CG, Kathon 886, Klarix 4000, Mergal K9 N, Mergal K14, Nousept 220CA, Neosept 44, Nuosept 515, Rocima 521, Rocima 551, Rocima 620 and Rocima GT.

The polyvinyl alcohol can optionally be cured, this is by means of crosslinking the OH groups within the polyvinyl alcohol. In principal all compounds can be used that are known to those skilled in the art for this purpose. These compounds are commercially available in a broad variety. Typical examples include, but are not limited to: Boric acid, polyamideamine-epichlorhydrin resins, for example Giluton VHW, glyoxal resins, for example Cartabond TSI, dialdehydes, for example Glyoxal and Glutaraldehyde, melamin/formaldehyde crosslinkers and organo titanates/zirconates, for example Orgatix TC300, Tyzor LA, Tyzor TE, Cartabond ZLA and Bacote 20.

The dissolution of the polyvinyl alcohol in water may be executed at any temperature between 80 and 100°C and is preferably executed in a temperature range of from 95 to 100 °C.

During preparation, the alignment layer of the present invention is located on an appropriate substrate.

As substrates, a great variety of substrates may be use which are common in particular in the preparation of decorative and security materials, but may also be used in optical elements like reflective polarisers, retardation films, compensators, colour filters or holographic elements, in nonlinear optics, optical recording or information storage.

Accordingly, useful substrates which may be used for the application of the present alignment layers are for example polymer films such as pre-coated PET, pigmented or dyed PET films, polyethylene films, polypropylene films, polyethylene terephthalate films, cellulosic films, triacetyl cellulose films, or films made of co-polymers thereof, all of them optionally in addition containing a release coating, but also metallized substrates, metal foils such as aluminium foil, paper, card board, wall paper, bank note paper etc., which may optionally be pre-coated or pre-printed. The substrates may also be composed of layered films which may contain different polymers in each layer, e.g. hot stamping foils, of combinations of polymers with paper or card board, etc.

The aqueous polyvinyl alcohol containing solution is applied onto the substrate by common coating or printing techniques, which will later be explained in more detail.

The thickness of the wet polyvinyl alcohol containing coating is usually between about 2 µm and 20 µm, leading to a dry alignment layer having thicknesses between about 0.1 µm and 2 µm in general. Preferred, the wet thickness of the coating is between 2 and 8 µm and the dry thickness is between 0.1 and 0.7 µm.

After application of the polyvinyl alcohol containing solution onto the substrate, the solution is subject to drying. Drying is performed for about 1 to 150 seconds and at temperatures of from 25°C to 150°C, 75°C to 100°C being preferred.

In some cases it may be preferred to cure the polyvinyl alcohol solution, this can be achieved by a number of techniques which will be known to those skilled in the art. To achieve cure, appreciably longer times will be required compared with drying, these could range up to many hours. Cure times will depend on the curing agent used. Temperatures will typically be in excess of 90°C and is limited by the Tg of the substrate being printed onto.

The solid alignment layer achieved by this process exhibits a smooth surface and a high degree of crystallinity, the latter is supposed to be due to the very high degree of hydrolysis. The resulting alignment layer is not subject to any rubbing or other mechanical treatment but is ready to use for the subsequent application of the polymerizable liquid crystalline or mesogenic material which has to be oriented in plane of the substrate/alignment layer and resulting liquid crystal layer, respectively.

The polymerizable liquid crystal material is preferably coated or printed onto the unrubbed surface of the alignment layer according to the present invention as a thin layer with a thickness of preferably 0.2 to 50 µm.

The liquid crystal material can be applied by any suitable surface coating or printing technique that is known to the skilled in the art, which is able to spread the polymerizable liquid crystal material onto the alignment layer to be coated, like for example spin coating, gravure coating or printing, flexographic coating or printing, offset coating or printing, Meyer bar coating, screen printing or ink-jet printing.

In case the polymerizable liquid crystal material is dissolved in a solvent, preferably in an organic solvent, the solution is also coated or printed onto the alignment layer, for example by spin-coating or other known coating or printing techniques, for example as those disclosed above, and the solvent is evaporated off. In most cases it is desirable to heat the mixture in order to facilitate the evaporation of the solvent. This will ideally be below the clearing point of the LC (the temperature at which the LC becomes an isotropic liquid), and preferably 5-10°C below the clearing point.

By means of the coating or printing technique applied, the liquid crystal material may fully or partially cover the unrubbed surface of the alignment layer according to the present invention. Even if the liquid crystal (LC) layer is applied as a patterned and/or non-continuous layer, which may be composed of small coated areas only, the LC material in the polymerized LC layer is aligned in a planar orientation prior to polymerization without any additional mechanical treatment of the alignment layer.

The polymerizable liquid crystal material is preferably a nematic, chiral nematic (cholesteric) or chiral smectic material. Nematic materials and cholesteric materials are especially preferred. In case of a cholesteric material, preferably a substrate or surface comprising a light absorbing material, like a dark or black substrate, is used or a comparable layer is later applied to the layered structure containing the polymerized cholesteric liquid crystal layer. For nematic materials, the use of a reflecting substrate or of a reflecting layer at any position in a layered structure containing the polymerized nematic liquid crystal layer is preferred.

The liquid crystal material of the anisotropic polymer film is preferably a polymerizable or crosslinkable material that is polymerized or crosslinked during or after evaporation of the solvent. It preferably comprises at least one polymerizable mesogenic compound having one polymerizable functional group and/or at least one polymerizable mesogenic compound having two or more polymerizable functional groups.

If the polymerizable LC material comprises polymerizable mesogenic compounds having one, two or more polymerizable functional groups (mono- or multireactive or mono-or multifunctional compounds), upon polymerization a three-dimensional polymer network is formed, which is self-supporting and shows a high mechanical and thermal stability and a low temperature dependence of its physical and optical properties. By varying the concentration of the multifunctional mesogenic or non mesogenic compounds the crosslink density of the polymer film and thereby its physical and chemical properties such as the glass transition temperature, which is also important for the temperature dependence of the optical properties of the polymerized film, the thermal and mechanical stability or the solvent resistance can be tuned easily.

The polymerizable mesogenic mono-, di- or multireactive compounds can be prepared by methods which are known per se and which are described, for example, in standard works of organic chemistry such as, for example, Houben-Weyl, Methoden der organischen Chemie, Thieme-Verlag, Stuttgart. Typical examples are described for example in WO 93/22397; EP 0 261 712; DE 19504224; DE 4408171 and DE 4405316. The compounds disclosed in these documents, however, are to be regarded merely as examples that do not limit the scope of this invention.

Examples representing especially useful monoreactive polymerizable mesogenic compounds are shown in the following list of compounds, which should, however, be taken only as illustrative and is in no way intended to restrict, but instead to explain the present invention:

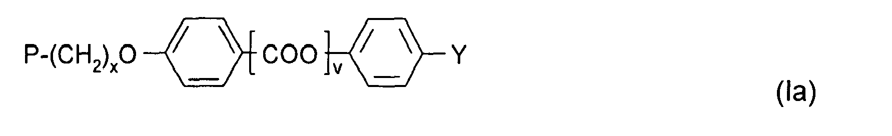

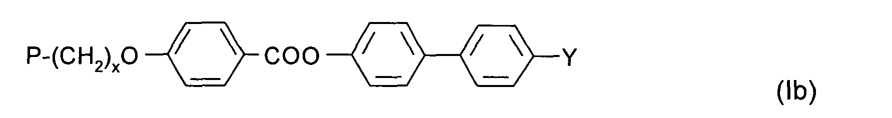

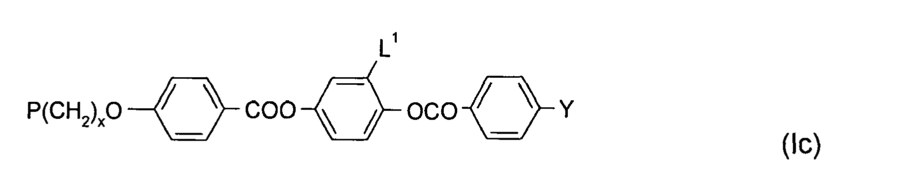

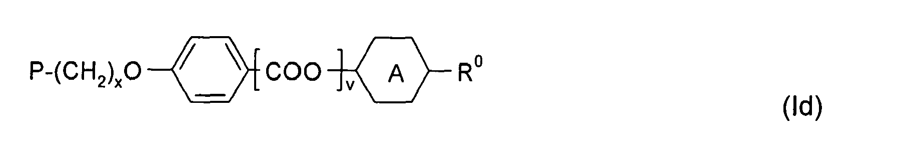

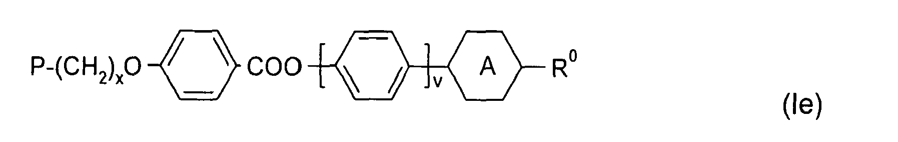

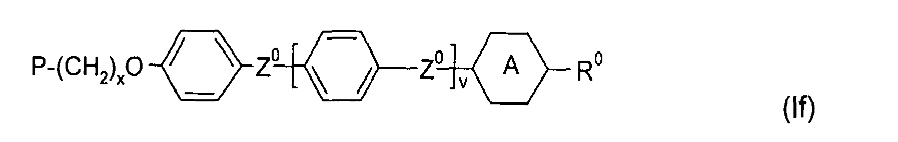

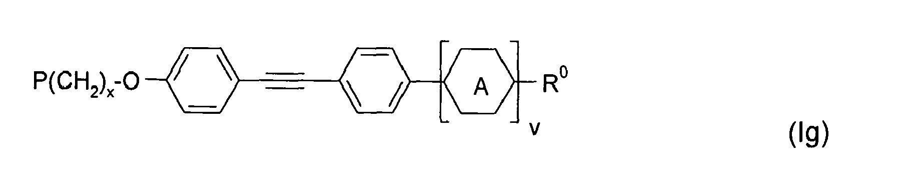

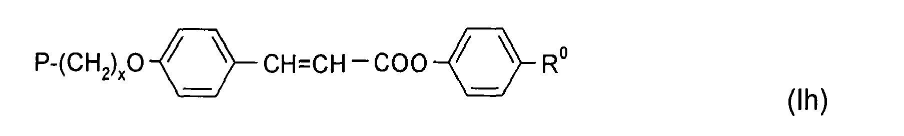

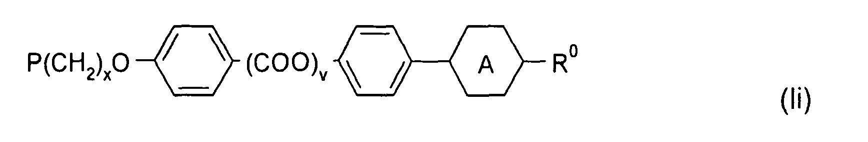

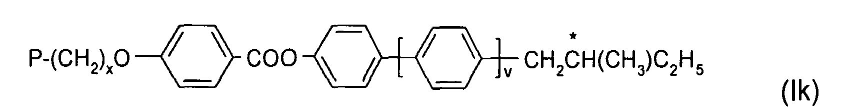

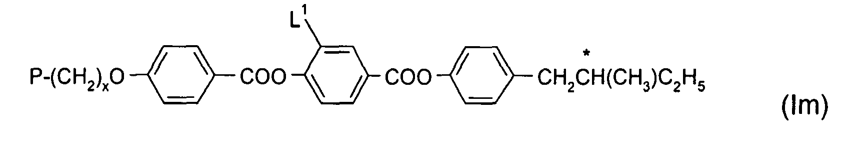

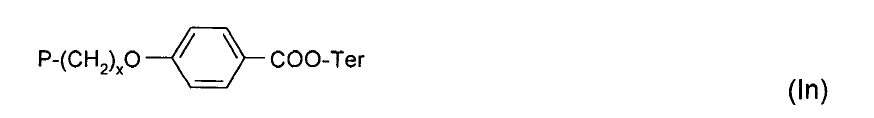

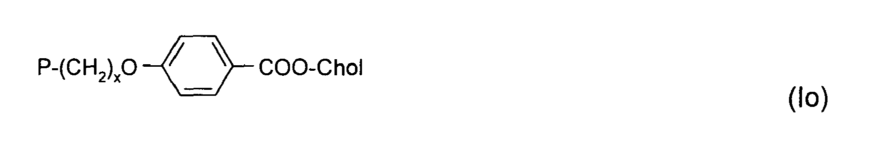

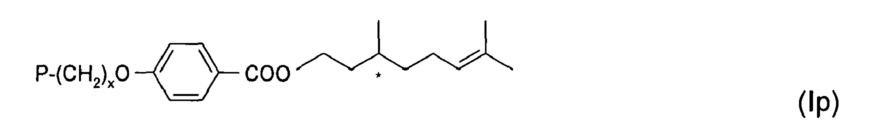

Examples of useful direactive polymerizable mesogenic compounds are shown in the following list of compounds, which should, however, be taken only as illustrative and is in no way intended to restrict, but instead to explain the present invention

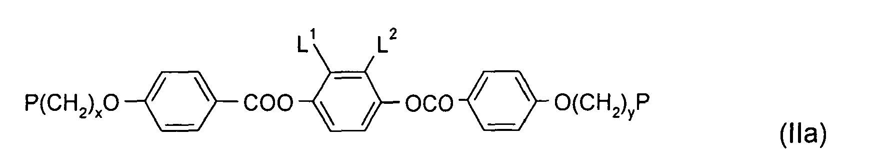

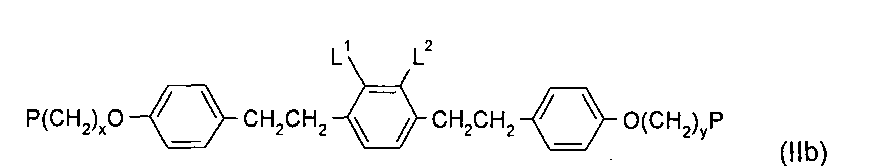

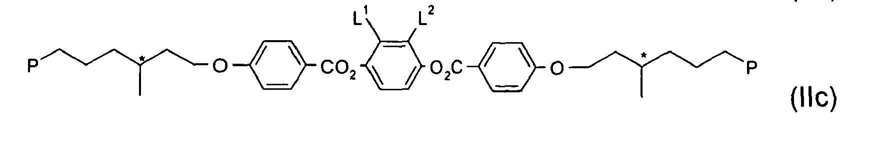

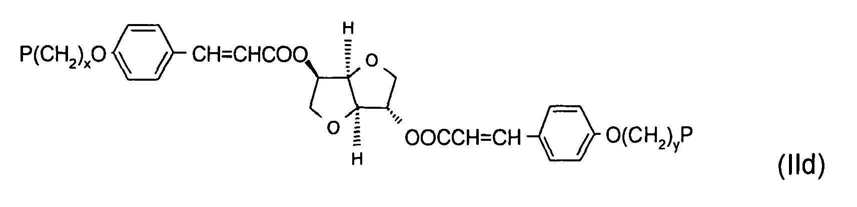

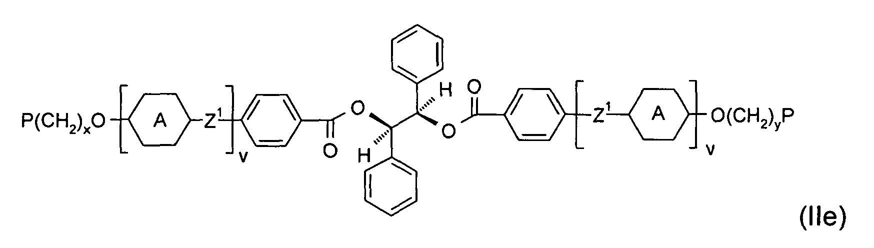

In the above formulae, P is a polymerizable group, preferably an acryl, methacryl, vinyl, vinyloxy, propenyl ether, epoxy or styryl group, x and y are each independently 1 to 12, A is 1,4-phenylene that is optionally mono- di or trisubstituted by L¹ or 1,4-cyclohexylene, V is 0 or 1, Z⁰ is -COO-, -OCO-, -CH₂CH₂- or a single bond, Y is a polar group, Ter is a terpenoid radical like e.g. menthyl, Chol is a cholesteryl group, R⁰ is an nonpolar alkyl or alkoxy group, and L¹ and L² are each independently H, F, Cl, CN or an optionally halogenated alkyl, alkoxy, alkylcarbonyl, alkoxycarbonyl or alkoxycarbonyloxy group with 1 to 7 C atoms.

The term 'polar group' in this connection means a group selected from F, Cl, CN, NO₂ OH, OCH₃, OCN, SCN, an optionally fluorinated carbonyl or carboxyl group with up to 4 C atoms or a mono- oligo- or polyfluorinated alkyl or alkoxy group with 1 to 4 C atoms. The term 'nonpolar group' means an alkyl group with 1 or more, preferably 1 to 12 C atoms or an alkoxy group with 2 or more, preferably 2 to 12 C atoms.

In case cholesteric liquid crystal (CLC) materials are used, these preferably comprise a nematic or smectic host material and one or more chiral dopants that induce a helical twist in the host material. The chiral dopants can be polymerizable or not. They can be mesogenic or liquid crystal compounds, but do not necessarily have to be liquid crystalline.

Especially preferred are chiral dopants with a high helical twisting power (HTP), in particular as disclosed in WO 98/00428. Further typically used chiral dopants are e.g. the commercially available S 1011, R 811 or CB 15 (from Merck KGaA, Darmstadt, Germany).

Very preferred are chiral dopants selected from the following formulae 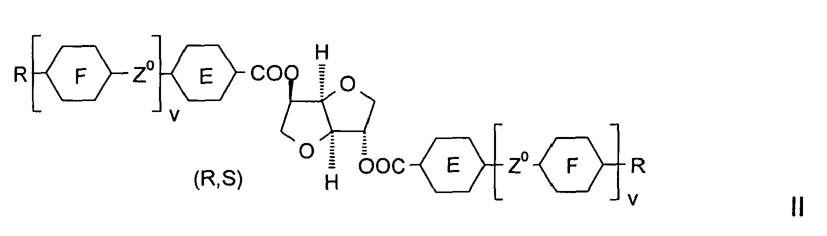 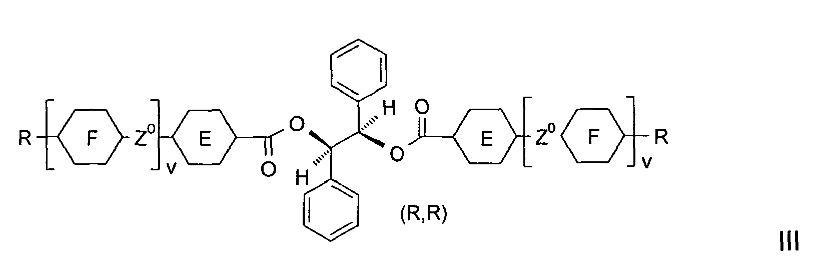 including the (R,S), (S,R), (R,R) and (S,S) enantiomers not shown,
wherein E and F have each independently one of the meanings of A given above, V is 0 or 1, Z⁰ is -COO-, -OCO-, -CH₂CH₂- or a single bond, and R is alkyl, alkoxy, carbonyl or carbonyloxy with 1 to 12 C atoms.

The compounds of formula II are described in WO 98/00428, the compounds of formula III synthesis are described in GB 2,328,207, the entire disclosure of which is incorporated into this application by reference.

Polymerizable chiral compounds are preferably selected from the above formulae Ik to Ip, and Ilc to Ile. It is also possible to use compounds of formula la to Ii wherein R⁰ or Y comprise a chiral C atom.

The amount of chiral dopants in the liquid crystal material is preferably less than 15 %, in particular less than10 %, very preferably less than 5 % by weight of the total LC material (without the solvent).

Examples of useful chiral compounds are shown in the above list of compounds, which should, however, be taken only as illustrative and is in no way intended to restrict, but instead to explain the present invention.

Polymerization of the polymerizable liquid crystal material takes place by exposing it to heat or actinic radiation. Actinic radiation means irradiation with light, like UV light, IR light or visible light, irradiation with X-rays or gamma rays or irradiation with high energy particles, such as ions or electrons. Preferably polymerization is carried out by UV irradiation. As a source for actinic radiation for example a single UV lamp or a set of UV lamps can be used. When using a high lamp power the curing time can be reduced. Another possible source for actinic radiation is a laser, like e.g. a UV laser, an IR laser or a visible laser.

The polymerization is carried out in the presence of an initiator absorbing at the wavelength of the actinic radiation. For example, when polymerizing by means of UV light, a photoinitiator can be used that decomposes under UV irradiation to produce free radicals or ions that start the polymerization reaction. When curing polymerizable mesogens with acrylate or methacrylate groups, preferably a radical photoinitiator is used, when curing polymerizable mesogens vinyl and epoxide groups, preferably a cationic photoinitiator is used. It is also possible to use a polymerization initiator that decomposes when heated to produce free radicals or ions that start the polymerization. As a photoinitiator for radical polymerization for example the commercially available Irgacure 651 ®, Irgacure 184 ®, Darocur 1173 ® or Darocur 4205 ® (all from Ciba Geigy AG) can be used, whereas in case of cationic photopolymerization the commercially available UVI 6974 ® (Union Carbide) can be used. The polymerizable LC material preferably comprises 0.01 to 10 %, very preferably 0.05 to 7 %, in particular 0.1 to 5 % of a polymerization initiator. UV photoinitiators are preferred, in particular radical forming UV photoinitiators.

The curing time is dependant, inter alia, on the reactivity of the polymerizable mesogenic material, the thickness of the coated layer, the type of polymerization initiator and the power of the UV lamp. The curing time according to the invention is preferably not longer than 5 minutes, particularly preferably not longer than 2 minutes and very particularly preferably shorter than 1 minute, e.g. about 30 seconds. For continuous production short curing times of 30 seconds or even less, very preferably of 10 seconds or less, are preferred.

The polymerizable liquid crystal material can additionally comprise one or more other suitable components such as, for example, catalysts, sensitisers, stabilisers, inhibitors, co-reacting monomers, surface-active compounds, lubricating agents, wetting agents, dispersing agents, hydrophobing agents, adhesive agents, flow improvers, defoaming agents, deaerators, diluents, reactive diluents, auxiliaries, colourants, dyes or pigments.

In particular the addition of stabilisers is preferred in order to prevent undesired spontaneous polymerization of the polymerizable material for example during storage. As stabilisers in principal all compounds can be used that are known to the skilled in the art for this purpose. These compounds are commercially available in a broad variety. Typical examples for stabilisers are 4-ethoxyphenol or butylated hydroxytoluene (BHT).

Other additives, like e.g. chain transfer agents, can also be added to the polymerizable material in order to modify the physical properties of the resulting polymer film. When adding a chain transfer agent, such as monofunctional thiol compounds like e.g. dodecane thiol or multifunctional thiol compounds like e.g. trimethylolpropane tri(3-mercaptopropionate), to the polymerizable material, the length of the free polymer chains and/or the length of the polymer chains between two crosslinks in the inventive polymer film can be controlled. When the amount of the chain transfer agent is increased, the polymer chain length in the obtained polymer film is decreased.

It is also possible, in order to increase crosslinking/hardness of the polymers, to add up to 20% of a non mesogenic compound with one or more polymerizable functional groups to the polymerizable material alternatively or in addition to the mono- or multifunctional polymerizable mesogenic compounds to increase crosslinking of the polymer. To increase the hardness of the polymer mono functional cyclic acrylates such as isobornyl acrylate can be used. Typical examples for difunctional non-mesogenic monomers are alkyldiacrylates or alkyldimethacrylates with alkyl groups of 1 to 20 C atoms. Typical examples for non-mesogenic monomers with more than two polymerizable groups are trimethylolpropane trimethacrylate or pentaerythritol tetraacrylate.

In another preferred embodiment the mixture of polymerizable material comprises up to 70%, preferably 3 to 50 % of a non-mesogenic compound with one polymerizable functional group. Typical examples for monofunctional non-mesogenic monomers are alkylacrylates or alkylmethacrylates.

It is also possible to add, for example, a quantity of up to 20% by weight of a non-polymerizable liquid-crystalline compound to adapt the optical properties of the resulting polymer film.

The polymerization is preferably carried out in the liquid crystal phase of the polymerizable material. Therefore, preferably polymerizable mesogenic compounds or mixtures with low melting points and broad liquid crystal phase ranges are used. The use of such materials allows a reduction of the polymerization temperature, which makes the polymerization process easier and is a considerable advantage especially for continuous production. The selection of suitable polymerization temperatures depends mainly on the clearing point of the polymerizable material and inter alia on the softening point of the substrate. Preferably the polymerization temperature is at least 30 degrees below the clearing temperature of the polymerizable mesogenic mixture. Polymerization temperatures below 120 °C are preferred. Especially preferred are temperatures below 90 °C, in particular temperatures of 60 °C or less.

The object of the present invention is also achieved by a method of preparing an alignment layer for the planar alignment of a polymerizable liquid crystalline or mesogenic material, which comprises the steps:
- applying an aqueous solution of a polyvinyl alcohol having a degree of hydrolysis of ≥ 98.0 mol %, the aqueous solution having a solids content of less than 10% by weight, based on the weight of the solution, onto a substrate, thereby forming a wet film, and
- drying and/or curing the resulting wet film by exposing it to air and/or heat,
wherein the polyvinyl alcohol is a pure or modified polyvinyl alcohol, and whereby an alignment layer is achieved, which comprises an unrubbed outer surface onto which a polymerizable liquid crystalline or mesogenic material is directly applyable.
As described earlier, the polyvinyl alcohol which may be used in the method according to the present invention is a pure or a modified PVA having the degree of hydrolysis as described above, as well as, preferably, having a high degree of polymerization. The materials which are in particular useful as pure or modified PVA have been disclosed earlier. As modified PVA, especially EVOH having the characteristics as described above has to be mentioned.

The aqueous solution of the PVA has a solids content which is less than 10% by weight, preferably from 5 to 8% by weight, based on the weight of the solution. The term 'solids' refers to the polyvinyl alcohol only, regardless whether further solid components are also contained in a dissolved state in the aqueous PVA solution.

Besides the PVA, the aqueous solution may additionally contain surfactants and/or other additives, which have also been described before.

The aqueous PVA solution is prepared by dissolving an appropriate amount of solid PVA powder and optionally a surfactant and/or further ingredients as described above in water, preferably deionized or RO (reverse osmosis) water, at a temperature of from about 80 to 100 °C, in particular of from 95 to 100°C and very preferred at 98 to 100°C, usually while stirring the mixture.

As usual, the aqueous solution of the PVA has to have a viscosity which is appropriate for the application method which is intended to be used. The adjustment of the corresponding viscosity is common in the printing and/or coating field and is not subject to any inventive action.

The aqueous PVA solution is then ready for use for the subsequent coating process.

Out of the coating and/or printing techniques for the application of the aqueous PVA solution, the following techniques are preferred: Flexographic coating or printing, gravure printing, Meyer bar coating, spin coating, screen printing, ink jet printing and slot dye coating.

In a preferred embodiment of the present invention, the substrate to be coated is entirely coated with the aqueous PVA solution on at least one of its surfaces in order to form the alignment layer according to the present invention. If the substrate is entirely coated, the subsequent application of the polymerisable LC material may be performed at the free discretion of the producer/customer at any area of the alignment layer, depending on where the intended aligned (part)area of the polymerized LC material shall be localised. This enables in particular patterned LC layers to be produced, which are not self-supporting when polymerized. It goes without saying that the preparation of continuous LC layers which cover the alignment layer in total are producable in a very simple manner too.

According to a further embodiment, it is of course also possible to coat the corresponding substrate only partly with the aqueous PVA solution in order to form a partial alignment area on the substrate, which may be overcoated by the polymerzable LC material in a subsequent step.

The aqueous PVA solution is applied by any appropriate coating or printing technique to have a wet thickness of from about 2 µm to 20 µm, preferably from 2 µm to 10 µm, in particular 4 µm to 8 µm.

Afterwards, the wet PVA coating is dried normally in air and at temperatures of from about 25°C to 150°C, preferably 75°C to 100°C to result in an alignment layer according to the present invention. Drying may also take place in other gases different from air or in a vacuum. The alignment layer exhibits a dry thickness in the range of from 0.1 µm to 2 µm, in particular of from 0.1 to 0.7 µm.

The alignment layer exhibits a high crystallinity, which is assumed to be due to the high degree of hydrolysis of the particular PVA used. The alignment layer of the present invention is ready for use once dried. No rubbing or any other mechanical treatment is necessary in order to achieve at a uniform planar alignment of the polymerizable liquid crystalline or mesogenic material which is intended to be applied onto at least one surface of the alignment layer.

The polymerizable liquid crystalline or mesogenic material which is applied onto the dried alignment layer according to the present invention in a subsequent step shall exhibit a, preferably uniform, planar orientation after polymerization.

Therefore, a further object of the present invention is achieved by an anisotropic polymer film comprising a polymerized liquid crystalline material with planar orientation, the anisotropic polymer film being formed by application of a polymerizable liquid crystalline or mesogenic material onto an alignment layer as described above, whereby a wet coating is formed, followed by polymerization of the polymerizable liquid crystalline or mesogenic material, whereby the wet coating is converted into an anisotropic polymerized film with planar orientation, and optionally removing the anisotropic polymerized film from the alignment layer.

In order to produce such an anisotropic polymer film, the polymerizable liquid crystalline or mesogenic material is applied onto the alignment layer according to the present invention by means of a coating or printing technique. Appropriate techniques have been disclosed earlier. Whenever appropriate, printing techniques are preferred, in particular when patterned and/or non-continuous LC layers shall be produced.

The wet LC layer is then polymerized as disclosed above. After polymerization, in particular in case that continuous LC layers are produced which form self-supporting polymer films, the polymerized LC film with planar orientation of the LC material may optionally be removed from the alignment layer underneath. To this end, the polymerized LC layer may be pulled off by mechanical forces or the PVA layer may be rinsed off with water, thereby separating the polymerized LC layer from the substrate and the alignment layer. In addition, a two-layered system being composed of the alignment layer and the polymerized LC layer may be removed from the substrate. This is usually done by mechanical forces. In such case, the alignment layer remaining adjacent to the polymerized LC layer may act as means for mechanically strengthen the polymerized LC layer as well as protective means. The substrate may also be separated off the alignment layer/polymerized LC layer by a separate release layer. Such release layer is in particular of advantage in case the alignment layer is removed together with the polymerized LC layer as a two-layered system as mentioned above. Materials which may be used for these release layers are known in the art. The self-supporting polymerized LC layer may then be incorporated into any desired product, including layered structures of any kind.

Layer stacks comprising alignment layers and polymerized LC films with planar orientation may also be produced by alternate coating of PVA layers as described above and polymerizable LC layers as described above, each on top of the other, the polymerized LC layers may optionally be removed from the alignment layers afterwards.

For most of the desired decorative and/or security applications it is, nevertheless, of advantage if the substrate, the alignment layer and the polymerized LC layer stay together in a layered structure which may either be used as it is, may be overcoated by one or more additional layers or may be included onto or into any desired product as appropriate.

Therefore, another object of the present invention is achieved by a layered structure, comprising an alignment layer as described above, a polymerized liquid crystalline material with planar orientation which is located directly on an unrubbed surface of the alignment layer and a substrate located on the rear side of the unrubbed surface of the alignment layer.

Layered structures of this kind may be used in optical applications as described above, but in particular in decorative and security applications. They may be used as they are, but may also be included into multilayered products such as hot-stamping foils, multifunctional labels, etc. To this end, they may be applied onto carrier material of several types or may be overcoated, overprinted, metallised or otherwise covered with different layers.

These additional layers may be applied either onto the outer surface of the polymerized LC layer having planar orientation, onto the surface of the substrate not carrying the alignment layer, or, optionally, onto both.

Layered structures of the above mentioned type may also be applied onto product surfaces of any kind (usually onto products which have to be secured where the layered structure acts as a security device), with the option that the substrate may be removed from the polymerized LC layer having planar orientation at any time of the lifetime of the product, whereby the alignment layer additionally acts as a release layer.

An additional object of the present invention is achieved by a product, comprising an anisotropic polymer film or a layered structure as described above.

As already mentioned, products of this type may be products such as optical elements like compensators, retardation layers, circular as well as linear polarizers, depending on the LC material used, colour filters or holographic elements, liquid crystal effect pigments, synthetic resins with anisotropic mechanical properties, nonlinear optics, optical recording or information storage media, etc. In particular, the products of the present invention are used in decorative and/or security applications, preferably for product or identification labels or security markings on documents of value like bank notes or ID cards.

Therefore, the product according to the present invention is preferably a decorative and/or security product.

Decorative and/or security products of the present invention are meant to include banknotes, passports, identification documents, smart cards, driving licenses, share certificates, bonds, cheques, cheque cards, tax banderols, postage stamps, tickets, credit cards, debit cards, telephone cards, lottery tickets and gift vouchers, but also packing materials based on polymer and/or metal(lized) foils, paper or card board, wall papers, tissue materials, product labels, decorative elements or labels on shoes, clothes, cosmetics, sporting goods, computer hard- and software and the like.

Products of this kind require a great variety of support materials, polymerized LC layers of different types of LC materials and a great variety of optical performances. Therefore, the alignment layer according to the present invention, which is applicable to support materials of materials which are different to a great extent (metal, paper based, polymer) and may be used to planar align nematic as well as cholesteric LC materials to obtain strongly different optical results, is a versatile alignment layer which is useful to a big advantage in the preparation of decorative and security products. Moreover, the present alignment layer as well as the products which may be derived therefrom (anisotropic nematic or cholesteric polymer film with planar alignment, layered structure including a substrate, the alignment layer and the anisotropic LC layer) may be produced in an easy and cheap manner. Neither organic solvents nor high curing temperatures are necessary in order to obtain an appropriate alignment layer nor is the latter deteriorated by a (organic) solvent based LC layer which is applied thereon.

The present alignment layer is therefore a useful instrument for the production of planar aligned polymer LC layers for various purposes.

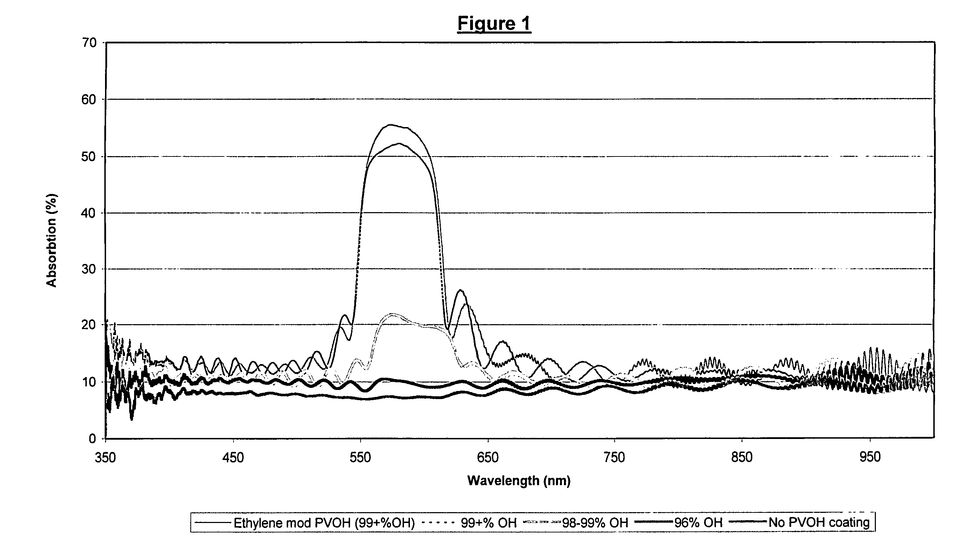

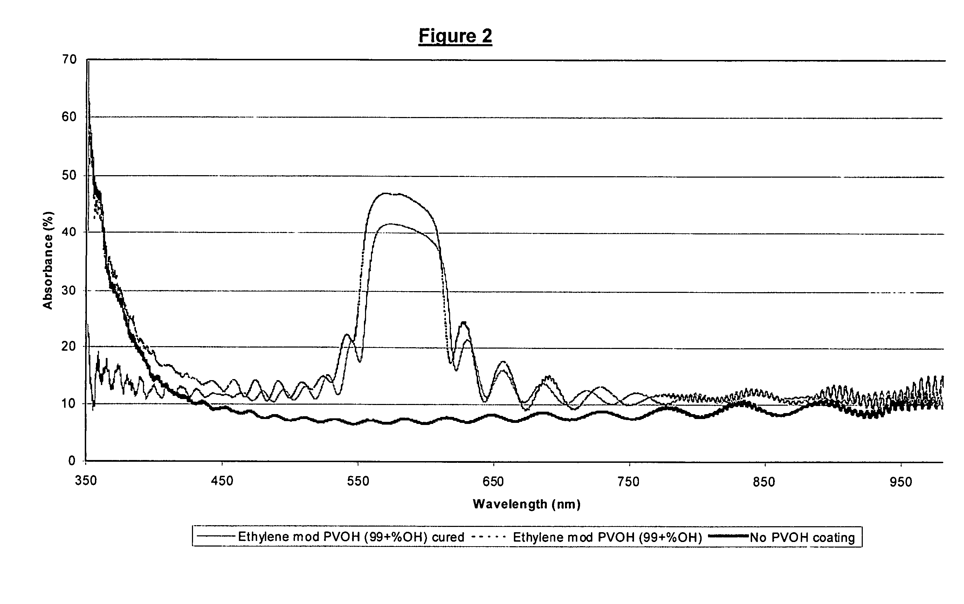

The present invention is described in more detail in the following examples as well as Figures 1 and 2, which are intended to merely illustrate but not to restrict the scope of the present invention.
- Fig. 1: discloses UV-visible spectra measured with an Ocean optics spectrophotometer of a cholesteric LC coating applied over PVA films having different OH content, using samples Solution 1-4 for the preparation of the PVA films, as well as onto a PET substrate exhibiting no PVA layer as comparison sample
- Fig. 2: discloses UV-visible spectra of a cholesteric LC coating applied over cured and uncured ethylene modified PVA having a OH content of ≥ 99 mol%, using Solutions 4 and 5, as well as onto a PET substrate exhibiting no PVA layer as comparison sample

In the foregoing and in the following examples, unless otherwise indicated, all temperatures are set forth uncorrected in degrees Celsius and all parts and percentages are by weight.

### Example 1

Prints are prepared to demonstrate the effect of varying the mol % of OH in PVA samples, and the effect that this has on a liquid crystal film applied on top of the PVA resins

### Preparation of PVA solutions

The PVA samples are dissolved in deionized water at 7% solids, based on the weight of the solution. In the following, PVA is also indicated PVOH.
4 different samples are prepared:
- Solution 1:: PVA exhibiting a degree of hydrolysis of more than 96 mol %, but lower than 98 mol % (PVOH 96+%), supplied by Aldrich catalogue number 363111
- Solution 2:: PVA exhibiting a degree of hydrolysis between 98 and 99 mol % (PVOH 98-99%), supplied by Aldrich catalogue number 363154
- Solution 3:.: PVA exhibiting a degree of hydrolysis of more than 99 mol % (PVOH 99+%), supplied by Aldrich catalogue number 363146
- Solution 4:: Exceval® HR3010 supplied by Kurraray, which is ethylene modified PVA (Ethylene mod PVOH 99+% OH),

The water is heated to 98-100°C under agitation from a magnetic stirrer bar, after approx 20 minutes all samples are in solution.

These solutions are coated onto a proprietary PET substrate with a undisclosed surface coating, however the same effect can be observed on numerous different substrates. Each of the PVA products is coated using a K Control Coater with a K Bar No.1, applying a 6 µm wet coating. To ensure identical conditions the PVOH samples are all applied side by side. They are then dried on a hot plate at 70°C for 2 minutes. Each of the dried PVA layers has a thickness of about 0.4 µm. A cholesteric LC (45% solids) is applied on top of each of the PVA layers using a K Control Coater with a K Bar No. 2, applying a 12 µm wet film. The coated substrate is then put on a hot plate at 60°C for 3 minutes. The resulting film is then cured using a Fusion system curing unit, 600 watts per linear inch (240 watts per cm), at 100% power output and at a conveyor speed of 50m/min, and a single pass through this machine.

UV-visible spectra are taken from the 4 samples mentioned above as well as from the substrate having the same cholesteric LC coating but not bearing any PVA coating as comparison sample.

The curves disclosed in Figure 1 show the UV-visible spectra measured using a bifurcated cable attached to an Ocean Optics spectrophotometer model USB4000 and a LS1 illumination source. It clearly shows that both the ethylene modified PVA (Ethylene mod PVOH (99+%OH)) Exceval® HR3010 and the PVOH 99+%OH give very similar results, at 98-99% OH a weaker, but positive effect is observed, however at 96%OH results are similar to the effect observed with no coating.

### Example 2

The effect of adding a curing agent to the modified PVA resin (Ethylene mod PVOH (99+% OH)) is studied.

Two solutions are prepared using the ethylene modified PVA (Ethylene mod PVOH (99+mol % OH)), resin Solution 4, as prepared in Example 1.

In a first sample, the corresponding solution is used as described.

For the second sample (Solution 5), to the solution of the ethylene modified PVA 20% of Glyoxal is added (50% solution in water), based on the resin solids. This will give 10% Glyoxal on the resin solids, thus yielding a formulation with 6.9% ethylene modified PVA, 0.69% Glyoxal and 92.41 % of water.

The two solutions Ethylene modified PVOH (99+ mol% OH) (Solution 4) and Ethylene modified PVOH (99+ mol% OH) + 10% Glyoxal on resin solids (Solution 5) are coated side by side using a K Bar No.1 to provide a 6µm wet film (leading to a 0.4µ dry film after drying). This is then placed on a hot plate at 100°C for 1 hour in order to ensure that Solution 5 is fully cured.

The results shown in Figure 2 indicate that there is a slight deterioration in the performance when the PVA resin is cured.

## Claims

1. Alignment layer for planar alignment of a polymerizable liquid crystalline or mesogenic material which is applied onto a surface of the alignment layer, wherein the alignment layer comprises a dried and/or cured aqueous solution of a polyvinyl alcohol having a degree of hydrolysis of ≥ 98.0 mol % and wherein the polyvinyl alcohol is a pure or modified polyvinyl alcohol.

2. Alignment layer according to claim 1, wherein the surface of the alignment layer onto which the polymerizable liquid crystalline or mesogenic material is applied is not subject to any rubbing treatment prior to applying the polymerizable liquid crystalline or mesogenic material.

3. Alignment layer according to claim 1 or 2, wherein the polyvinyl alcohol is modified with an α-olefin having less than 4 carbon atoms.

4. Alignment layer according to at least one of claims 1 to 3, wherein the polyvinyl alcohol is modified with ethylene.

5. Alignment layer according to at least one of claims 1 to 4, wherein the polymerizable liquid crystalline or mesogenic material is a nematic or chiral nematic (cholesteric) liquid crystalline material.

6. Alignment layer according to at least one of claims 1 to 5, further comprising a surfactant.

7. Alignment layer according to at least one of claims 1 to 6, wherein the alignment layer is located on a substrate.

8. Method of preparing an alignment layer for the planar alignment of a polymerizable liquid crystalline or mesogenic material, comprising the steps
- applying an aqueous solution of a polyvinyl alcohol having a degree of hydrolysis of ≥ 98.0 mol %, the aqueous solution having a solids content of less than 10% by weight, based on the weight of the solution, onto a substrate, thereby forming a wet film,
and
- drying and/or curing the resulting wet film by exposing it to air and/or heat,
wherein the polyvinyl alcohol is a pure or modified polyvinyl alcohol, and whereby an alignment layer is achieved, which comprises an unrubbed outer surface onto which a olymerizable liquid crystalline or mesogenic material is directly applyable.

9. Method according to claim 8, wherein the polyvinyl alcohol is modified with an α-olefin having less than 4 carbon atoms.

10. Method according to claim 8 or 9, wherein the polyvinyl alcohol is modified with ethylene.

11. Method according to at least one of claims 8 to 10, wherein the aqueous solution of a polyvinyl alcohol is applied onto the substrate by means of a coating or printing technique.

12. Anisotropic polymer film comprising a polymerized liquid crystalline material with planar orientation, the anisotropic polymer film being formed by application of a polymerizable liquid crystalline or mesogenic material onto an alignment layer according at least one of claims 1 to 7, whereby a wet coating is formed, followed by polymerization of the polymerizable liquid crystalline or mesogenic material, whereby the wet coating is converted into an anisotropic polymerized film with planar orientation, and optionally removing the anisotropic polymerized film from the alignment layer.

13. Anisotropic polymer film according to claim 12, wherein the alignment layer is located on a substrate and is, subsequent to the conversion of the liquid crystalline or mesogenic material into the anisotropic polymerized film with planar orientation, removed from the substrate together with the anisotropic polymerized film in the form of a two-layered system.

14. Anisotropic polymer film according to claim 12 or 13, wherein the polymerizable liquid crystalline or mesogenic material is applied onto the alignment layer by means of a coating or printing technique.

15. Layered structure, comprising an alignment layer according to one or more of claims 1 to 7, a polymerized liquid crystalline material with planar orientation which is located directly on an unrubbed surface of the alignment layer and a substrate located on the rear side of the unrubbed surface of the alignment layer.

16. Product, comprising an anisotropic polymer film according to any of claims 12 to 14 or a layered structure according to claim 15.

17. Product according to claim 16, which is a decorative or security product.
